# EUROPÄISCHE PATENTSCHRIFT

(11) **EP 0 875 409 B1**
(45) Veröffentlichungstag und Bekanntmachung des Hinweises auf die Patenterteilung: **27.11.2002**
(21) Anmeldenummer: 98810347.9
(22) Anmeldetag: 21.04.1998
(51) Int. Cl.: B60K 13/04, F01N 7/08

(54) **Abgasanlage für ein Kraftfahrzeug sowie Kraftfahrzeug und Verfahren für die Bildung einer Abgasanlage**
Exhaust system for a motor vehicle and process for making an exhaust system
Système d'échappement pour véhicules automobiles et procédé pour la formation d'un système d'échappement

(30) Priorität: 28.04.1997 CH 98797
(43) Veröffentlichungstag der Anmeldung: 04.11.1998
(73) Patentinhaber: SCAMBIA INDUSTRIAL DEVELOPMENTS AKTIENGESELLSCHAFT, 9494 Schaan (LI)
(72) Erfinder: Alexnat, John W. Jörg, 3700 Tongeren (BE); Steenackers, Pieter Delfina, Dr., 3030 Heverlee (BE)
(74) Vertreter: Eder, Carl E.

(56) Entgegenhaltungen:
- EP-A- 0 750 100
- US-A- 5 251 720

## Beschreibung

Die Erfindung betrifft eine Abgasanlage gemäss dem Oberbegriff des Anspruchs 1. Die Abgasanlage ist zum Beispiel für einen Personenkraftwagen vorgesehen, kann jedoch eventuell auch für ein anderes Kraftfahrzeug - zum Beispiel einen Lastkraftwagen oder Bus - verwendet werden. Der Verbrennungsmotor kann dabei aus einem Benzin- oder Dieselmotor bestehen.

Eine solde Abgasanlage ist beispiels weise aus der US 5 251 720 bekannt.

Das Motorgehäuse des Verbrennungsmotors eines Kraftfahrzeugs ist üblicherweise mit Haltemitteln ein wenig beweglich, federnd und schwingungsdämpfend am Fahrzeugkörper gehalten. Bei der Verwendung des Kraftfahrzeugs verursachen schnelle Laständerungen, schnelle Änderungen der Drehzahl der Motorwelle und/oder des von dieser abgegebenen Drehmoments schnelle Änderungen der Leistung des Verbrennungsmotors. Diese können ihrerseits Bewegungen, nämlich näherungsweise Drehungen und/oder Verschwenkungen des Motorgehäuses um eine virtuelle Dreh- und/oder Schwenk-Achse verursachen. Ferner erzeugt der Verbrennungsmotor Vibrationen bzw. Schwingungen des Motorgehäuses. Diese können unter anderem periodische Hin- und Her-Verschwenkungen bzw. Drehschwingungen um die virtuelle Dreh- und/oder Schwenk-Achse verursachen. Die virtuelle Achse fällt meistens nicht mit der geometrischen Drehachse der Motorwelle zusammen und ist beispielsweise gegen die Motorwellen-Drehachse versetzt sowie beispielsweise ungefähr parallel zu dieser. Das Motorgehäuse kann bei den durch Leistungsänderungen und/oder durch Vibrationen verursachten Verschwenkungen um Winkel hin und her geschwenkt bzw. gedreht werden, die beispielsweise bis ungefähr 5° betragen.

Bekannte Auspuffe haben einen starr mit dem Motorgehäuse verbundenen Auspuffabschnitt, der über ein flexibles Leitungselement mit mindestens einen stromabwärts von diesem angeordneten, ein Gehäuse aufweisenden Katalysator und/oder Schalldämpfer verbunden ist. Wenn der sich stromabwärts von einem flexiblen Leitungselement befindende Auspuffabschnitt mehrere Gehäuse enthält, ist zwischen den aufeinanderfolgenden Gehäusen manchmal ebenfalls noch ein flexibles Leitungselement angeordnet. Die flexiblen Leitungselemente besitzen beispielsweise einen Wellenbalg. Der sich stromabwärts des flexiblen Leitungselements befindende Auspuffabschnitt ist üblicherweise mit beispielsweise Gummiringe aufweisenden Haltemitteln beweglich am Fahrzeugkörper gehalten.

Der starr mit dem Motorgehäuse verbundene Auspuffabschnitt wird beim Betrieb vom Verschwenkungen ausführenden Motorgehäuse mitbewegt und führt bei seiner Verbindung mit dem (ersten) flexiblen Leitungselement Schwenkbewegungen aus, deren Bogenlängen - abhängig vom Abstand von der virtuellen Achse - beispielsweise mehrere Zentimeter betragen und starke Deformationen des Wellenbalgs verursachen. Bei diesen Bewegungen wird normalerweise auch der Abstand des Eingangs des Wellenbalgs vom (ersten) Gehäuse verändert. Dies hat meistens zur Folge, dass der Wellenbalg nicht nur häufig gebogen, sondern gleichzeitig auch abwechselnd zusammengedrückt und gedehnt sowie häufig auch Scherbewegungen ausgesetzt wird. Wellenbälge können sehr viele Biegungen ohne Schaden aushalten. Ferner sind auch kleine Längenänderungen der Wellenbälge zulässig. Gleichzeitig mit Biegungen stattfindende Längenänderungen und vor allem Scherbewegungen verursachen jedoch starke Beanspruchungen der Wellenbälge und verkürzen deren Lebensdauer.

Der Erfindung liegt daher die Aufgabe zugrunde, eine Abgasanlage zu schaffen, die Nachteile der bekannten Abgasanlagen behebt und insbesondere eine lange Lebensdauer des (ersten) flexiblen Leitungselements ermöglicht, das entlang dem Abgas-Strömungsweg auf den starr mit dem Motorgehäuse verbundenen Auspuffabschnitt folgt.

Die Aufgabe wird gemäss der Erfindung durch eine Abgasanlage mit den Merkmalen des Anspruchs 1 gelöst.

Die Erfindung betrifft ferner ein Kraftfahrzeug gemäss dem Anspruch 8 und ein Verfahren zur Bildung einer Abgasanlage gemäss dem Anspruch 10.

Vorteilhafte Ausgestaltungen des Erfindungsgegenstands gehen aus den abhängigen Ansprüchen hervor.

Gemäss der Erfindung definieren zwei durch ein Rohr miteinander verbundene, flexible Leitungselemente eine durch die beiden flexiblen Leitungselemente, beispielsweise ungefähr durch deren Zentren verlaufende Gerade, die mindestens annähernd die virtuelle Dreh- und/oder Schwenk-Achse kreuzt. Die Lage und Richtung der virtuellen Achse sind von der Ausbildung des Verbrennungsmotors und der erwähnten Haltemittel abhängig, mit denen das Motorgehäuse schwingungsdämpfend am Fahrzeugkörper gehalten ist. Die Lage und Richtung der virtuellen Achse können zudem auch noch vom Zustand des Kraftfahrzeugs und des Verbrennungsmotors, beispielsweise von der Temperatur des Verbrennungsmotors und/oder der Drehzahl der Motorwelle und/oder der vom Verbrennungsmotor momentan erzeugten Leistung abhängig sein. Ferner können Leistungsänderungen eventuell noch eine leicht rollende Bewegung des Motorgehäuses bewirken. Des weiteren können die Vibrationen auch mehr oder weniger lineare Bewegungen des Motorgehäuses verursachen, so dass sich Schwenkbewegungen und lineare Bewegungen überlagern. Zudem kann das Fahren des Fahrzeugs noch Bewegungen des Motorgehäuses verursachen. Das Motorgehäuse führt also wegen Leistungsänderungen und/oder Schwingungen oft nicht reine, sondern nur näherungsweise Schwenkbewegungen um eine virtuelle Achse aus. Ferner können die Lage und Richtung der virtuellen Achse auch noch ein wenig von Schwenkwinkel bzw. der Amplitude einer geraden stattfindenden Schwenkbewegung und/oder von der momentanen Schwenkstellung des Motorgehäuses abhängig sein. Die Lagen und Formen der flexiblen Leitungselemente können ebenfalls vom Zustand des Verbrennungsmotors sowie der Abgasanlage, insbesondere von der Temperatur des Auspuffs abhängig sein. Die Lage und Richtung der virtuellen Achse können jedoch experimentell für einen bestimmten Zustand des Kraftfahrzeugs und Verbrennungsmotors, beispielsweise für ein stillstehendes Fahrzeug nach Erreichen der normalen mittleren Betriebstemperatur des Motors bei einer mittleren Motorleistung und für eine mittlere Schwenkstellung des Motorgehäuses, ermittelt werden. Die flexiblen Leitungselemente können dann gemäss der Erfindung derart angeordnet werden, dass die durch die flexiblen Leitungselemente, beispielsweise ungefähr durch deren Zentren, verlaufende Gerade die virtuelle Achse in einem bestimmten Zustand des Kraftfahrzeugs, des Verbrennungsmotors und der Abgasanlage - beispielsweise bei stillstehendem Fahrzeug, kaltem, stillstehendem Motor sowie kaltem Auspuff und/oder bei stillstehendem Fahrzeug, ungefähr normalen, mittleren Betriebstemperaturen des Verbrennungsmotors sowie des Auspuffs und mittlerer, konstanter Leistung sowie mittlerer Stellung, insbesondere mittleren Schwenkstellung, des Verbrennungsmotors - mindestens annähernd und beispielsweise genau kreuzt.

Die zwei flexiblen Leitungselemente weisen vorzugsweise je einen Wellenbalg auf. Das die beiden flexiblen Leitungselemente verbindende Rohr ist vorzugsweise frei von anderen Bauteilen, wie durch Schalldämpfern, und ferner im wesentlichen starr. Das erste entlang dem Abgas-Strömungsweg stromabwärts vom zweiten flexiblen Leitungselement angeordneten Gehäuse eines Schalldämpfers und/oder Katalysators ist vorzugsweise schwingungsdämpfend, aber nur um kleine Distanzen auslenkbar am Fahrzeugkörper gehalten.

Wenn das Motorgehäuse beim Betrieb des Verbrennungsmotors wegen Leistungsänderungen von diesem und/oder wegen vom Verbrennungsmotor erzeugten Vibrationen mindestens näherungsweise Schwenkbewegungen um die virtuelle Achse ausführt, ergibt die erfindungsgemässe Abgasanlage den Vorteil, dass die flexiblen Leitungselemente durch die Schwenkbewegungen des Motorgehäuses gebogen werden, ohne dass die Längen der flexiblen Leitungselemente nennenswert geändert werden. Mit der Länge eines flexiblen Leitungselements ist dabei die entlang und auf dessen Achse gemessene Länge gemeint, wobei diese Achse in der Längsrichtung des Leitungselements sowie in der allgemeinen Strömungsrichtung des Abgases verläuft. Ferner können auch Scherungen der flexiblen Leitungselemente weitgehend vermieden werden. Die zwei flexiblen Leitungselemente haben daher eine hohe Lebensdauer. Ferner trägt die erfindungsgemässe Anordnung der beiden flexiblen Leitungselemente dazu bei, dass die Abgasanlage leicht ausgebildet werden kann und trotzdem dauerhaft ist.

Der Erfindungsgegenstand wird anschliessend anhand in der Zeichnung dargestellter Ausführungsbeispiele erläutert. In der Zeichnung zeigt
Fig. 1 ein schematisch, teils in Ansicht, teils im Schnitt gezeichnetes Kraftfahrzeug mit einer Abgasanlage,
Fig. 2 einen Ausschnitt aus Fig. 1 in grösserem Massstab,
Fig. 3 ein teils in Ansicht, teils im Axialschnitt dargestelltes, flexibles Leitungselement der Abgasanlage,
Fig. 4 eine Endansicht des ersten Schalldämpfers der Abgasanlage,
Fig. 5 einen Schnitt durch einen zum Halten des ersten Schalldämpfers dienenden Halters entlang der Linie V - V der Fig. 4 in grösserem Massstab als diese, und
Fig. 6 einen zur Fig. 2 analogen Ausschnitt aus einem Kraftfahrzeug mit einer anderen Abgasanlage,

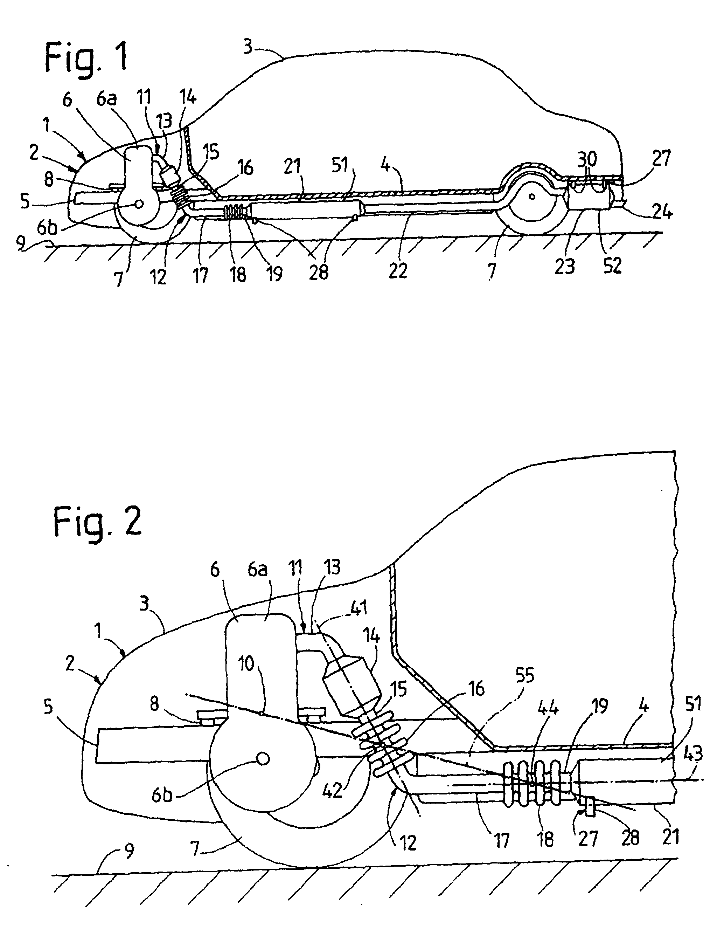

Das schematisch in Fig. 1 und zum Teil in Fig. 2 gezeichnete Kraftfahrzeug 1 besteht aus einem Personenkraftwagen und besitzt einen Fahrzeugkörper 2. Dieser weist eine Karosserie 3, einen Fahrzeugboden 4 und ein Gestell 5 auf. Die Karosserie ist beispielsweise selbsttragend und bildet auch mindestens einen Teil des Bodens und/oder des Gestells. Der Fahrzeugkörper 2 hält einen Verbrennungsmotor 6 und Räder 7. Der Verbrennungsmotor 6 besitzt ein Motorgehäuse 6a und eine Motorwelle 6b. Das Motorgehäuse 6a ist mit Haltemitteln 8, die deformierbare Gummiblöcke oder dergleichen aufweisen, ein wenig beweglich, federnd und schwingungsdämpfend am Gestell 5 gehalten. Das Motorgehäuse 6a hat mehrere Abgasauslässe, von denen jeder einem Zylinder des Motors zugeordnet ist. Das Kraftfahrzeug 1 steht mit seinen Rädern auf einer horizontalen Fahr-Ebene 9. Die Motorwelle 6b ist im allgemeinen parallel zur Fahr-Ebene 9 und rechtwinklig zur Fahrzeug-Längsrichtung. Das Motorgehäuse 6a kann beim Betrieb des Verbrennungsmotors 6 näherungsweise Hin- und Her-Drehungen bzw. Verschwenkungen um eine virtuelle Dreh- oder Schwenk-Achse 10 ausführen. Diese ist zum Beispiel ungefähr parallel zur Motorwelle 6b sowie gegen diese versetzt und also ungefähr parallel zur Fahr-Ebene 9 sowie ungefähr rechtwinklig zur Fahrzeug-Längsrichtung.

Das Kraftfahrzeug besitzt eine Abgasanlage 11 mit einem Auspuff 12. Dieser weist in der Strömungsrichtung des Abgases der Reihe nach eine Einlass- und Sammelvorrichtung 13, mindestens einen Katalysator 14, eine Verbindung 15, ein erstes elastisch deformierbares, insbesondere flexibles Leitungselement 16, ein gebogenes Rohr 17, ein zweites elastisch deformierbares, insbesondere flexibles Leitungselement 18, eine eventuell ein kurzes Rohr aufweisende Verbindung 19, einen ersten Schalldämpfer 21, ein relativ langes, gebogenes Rohr 22, einen zweiten Schalldämpfer 23 und einen durch ein Rohr 24 gebildeten, in die Umgebung mündenden Auslass auf. Der Verbrennungsmotor 6 befindet sich beim vorderen Ende des Kraftfahrzeugs 1. Der Auspuff 12 verläuft vom Verbrennungsmotor 5 zum Heck des Fahrzeugs und befindet sich zu einem grossen Teil unterhalb des Fahrzeugbodens 4. Zur Abgasanlage 11 gehören ferner Haltemittel 27. Diese weisen vier Halter 28, 30 auf, welche die beiden Schalldämpfer 21 bzw. 23 in der Nähe von deren Enden mit einem starren Teil des Fahrzeugkörpers 2, nämlich mit dem Fahrzeugboden 4 verbinden.

Die Einlass- und Sammelvorrichtung 13 besitzt einen Auspuffkrümmer, der für jeden Abgasauslass des Motors ein mit einem der Abgasauslässe des Motorgehäuses verbundenes Einlassrohr aufweist. Die Vorrichtung 13 besitzt ferner die Ausgänge der Einlassrohre miteinander verbindende Sammelverbindungsmittel und einen für alle Einlassrohre gemeinsamen Ausgang. Die Einlass- und Sammelvorrichtung 13 ist beispielsweise vollständig starr oder mindestens derart ausgebildet, dass der gemeinsame Ausgang starr mit dem Motorgehäuse 6a verbunden ist. Der Katalysator 14 hat ein starres Gehäuse mit einem Eingang, der starr mit dem gemeinsamen Ausgang der Einlass- und Sammelvorrichtung 13 verbunden ist. Die Rohre 17, 22, 24 und die allenfalls bei den Verbindungen 15, 19 vorhandenen Rohre sind starr. Die Einlass- und Sammelvorrichtung 13, das Gehäuse des Katalysators 14, die Rohre 17, 22, 24 und die Verbindungen 15, 19 bestehen aus metallischen Materialien, beispielsweise rostfreiem Stahl. Die aufeinanderfolgenden Teile 13 bis 24 des Auspuffs sind dicht miteinander verbunden.

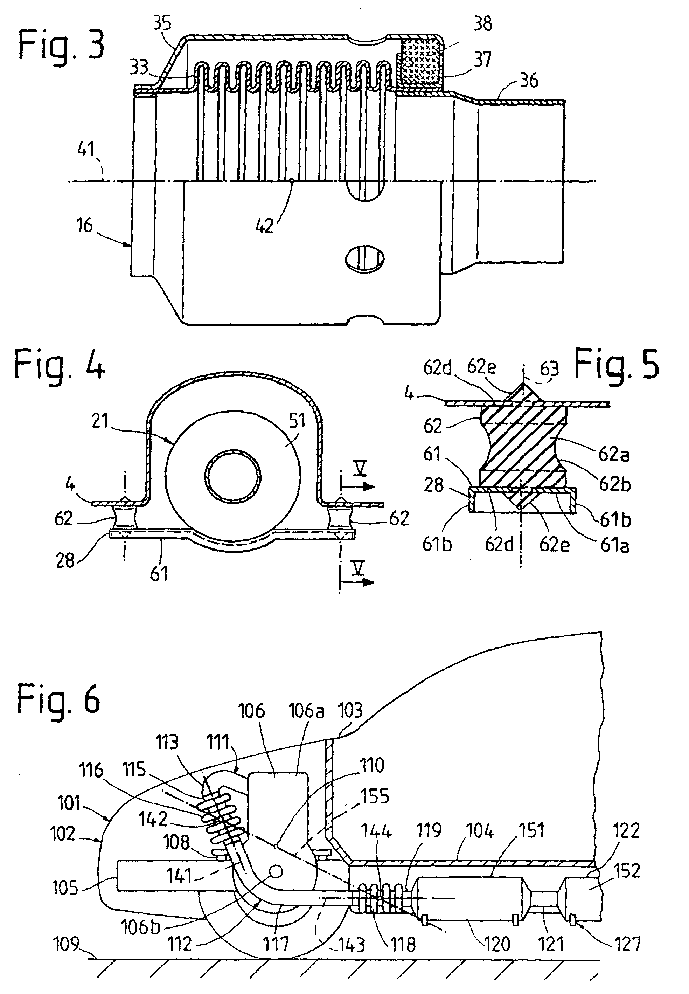

Das erste der beiden in den Figuren 1 und 2 nur schematisch dargestellten, elastisch deformierbaren, flexiblen Leitungselemente 16, 18 ist separat in Fig. 3 ersichtlich und besitzt einen Wellenbalg 33, eine diesen im Querschnitt umschliessende Hülse 35, einen Stutzen 36, einen im Querschnitt ungefähr U-förmigen Ring 37 mit einer gegen aussen offenen Rinne und ein in dieser gehaltenes, deformierbares Dämpfungsorgan 38. Dieses ist durch ein mehrlagiges, zu einem Ring mit vollem Querschnitt geformten Drahtgewebe gebildet und ragt aussen aus der Rinne des Rings 37 hinaus. Die genannten Teile des flexiblen Leitungselements 16 bestehen aus metallischen Materialien, beispielsweise rostfreiem Stahl. Der Wellenbalg 33 hat an beiden Enden einen zylindrischen Endabschnitt und ist an seinem sich in der Fig. 3 links befindenden Ende starr sowie dicht mit dem Ende der Hülse 35 verbunden, nämlich verschweisst. Diese Enden des Wellenbalgs 33 und der Hülse bilden zusammen den ersten Anschluss - nämlich den Eingang - des Leitungselements 16. Das sich in der Fig. 3 rechts befindende Ende des Wellenbalgs ist fest und dicht mit dem weiteren Endabschnitt des Stutzens 36 und mit dem Ring 37 verbunden, nämlich verschweisst. Der andere, engere Endabschnitt des Stutzens 36 bildet den zweiten Anschluss - nämlich den Ausgang - des Leitungselements. Die Hülse 35 hat einen zylindrischen Mittelabschnitt, der durch einen Zwischenraum von den äusseren Wellenscheiteln des Wellenbalgs getrennt ist und einige Löcher aufweist. Der sich in der Fig. 3 rechts befindende Endabschnitt der Hülse 35 ist nach innen abgebogen und umgreift einen Abschnitt des Dämpfungsorgans 38. Das erste Leitungselement 16 ist in undeformiertem, entspanntem Zustand gerade, definiert dann eine gerade Leitungselement-Achse 41 und ist im allgemeinen rotationssymmetrisch zu dieser. Das erste flexible Leitungselement 16 definiert mindestens ungefähr ein Leitungselement-Zentrum 42, das auf der Achse 41 liegt und sich beispielsweise in der Mitte des gewellten Abschnitts des Wellenbalgs 33 befindet. Die Hülse 35 schützt den Wellenbalg 33 gegen von aussen kommende, mechanische Einwirkungen und begrenzt zusammen mit den Teilen 36, 37, 38 die Deformationen, d.h. die Biegungen, Verlängerungen sowie Verkürzungen des Wellenbalgs. Das Leitungselement 16 ist beispielsweise derart ausgebildet, dass es mindestens 5° gebogen werden kann.

Das zweite, elastisch deformierbare, flexible Leitungselement 18 ist gleich oder ähnlich wie das erste Leitungselement ausgebildet, ist in undeformiertem Zustand gerade und definiert dann eine gerade Leitungselement-Achse 43 und mindestens ungefähr ein Leitungselement-Zentrum 44.

Der erste Schalldämpfer 21 weist das erste stromabwärts von den flexiblen Leitungselementen 16, 18 angeordnete Gehäuse 51 und der zweite Schalldämpfer 23 das zweite in bezug auf die Abgas-Strömungsrichtung nach den flexiblen Leitungselementen angeordnete Gehäuse 52 auf.

Die Abgasauslässe des Motorgehäuses 6a befinden sich auf der dem Fahrzeug-Heck zugewandten Seite des Motorgehäuses. Die beiden flexiblen Leitungselemente 16, 18 befinden sich auf der sich näher beim Fahrzeug-Heck befindenden Seite einer zur Fahr-Ebene 9 senkrechten, durch die virtuelle Achse 10 verlaufenden Ebene. Das erste flexible Leitungselement 16 ist von der Verbindung 15 und seinem Eingang weg nach unten gerichtet, so dass die Leitungselement-Achse 41 einen Winkel mit der Fahr-Ebene 9 bildet und gegen diese geneigt oder senkrecht zu dieser ist. Die Leitungselement-Achse 43 des zweiten Leitungselements 18 ist beispielsweise ungefähr parallel zur horizontalen Fahr-Ebene 9 oder bildet mit dieser höchstens einen kleinen Winkel. Die Achse 43 des zweiten Leitungselements 18 ist ferner beispielsweise ungefähr parallel zur Fahrzeug-Längsrichtung und fällt beispielsweise ungefähr mit der Achse des ersten Gehäuses 51 des ersten Schalldämpfers zusammen. Die beiden beispielsweise mindestens bei ruhendem, kaltem Motor und kaltem Auspuff geraden Leitungselement-Achsen 41, 43 können sich kreuzen oder auch nicht, bilden aber vorzugsweise einen Winkel miteinander, der beispielsweise mindestens 30° beträgt. In den Figuren 1 und 2 ist noch eine Leitungselemente-Verbindungsgerade 55 eingezeichnet. Diese verläuft bei kaltem, stillstehendem Verbrennungsmotor sowie kaltem Auspuff und/oder wenn der Motor sowie der Auspuff die Betriebstemperaturen aufweisen und wenn sich das Motorgehäuse in der mittleren Schwenkstellung befindet, durch die beiden Leitungselemente 16, 18, nämlich zum Beispiel mindestens annähernd durch deren Zentren 42, 44 und kreuzt ferner mindestens annähernd die virtuelle Drehund/oder Schwenk-Achse 10 des Verbrennungsmotors. Die Leitungselemente-Verbindungsgerade 55 ist beispielsweise gegen die Fahr-Ebene geneigt. Die beiden Zentren 42, 44 liegen auf der Geraden 55 auf der gleichen Seite der virtuellen Achse 10.

Das erste Gehäuse 51 des auch in Fig. 4 ersichtlichen ersten Schalldämpfers 21 besitzt eine dichte Wandung mit einem im wesentlichen zylindrischen Mantel und zwei einander abgewandten, dicht und fest mit dem Mantel verbundenen Endwänden. Die beiden zur Befestigung des ersten Schalldämpfers 21 dienenden Halter 28 sind beispielsweise gleich oder ähnlich ausgebildet, stehen entlang dem Schalldämpfer in Abstand von einander und sind in der Nähe der beiden Enden des Schalldämpfers 21 an dessen Mantel befestigt. Der Halter 28 ist zum Beispiel gemäss den Figuren 4 sowie 5 ausgebildet, in denen auch ein Ausschnitt des Fahrzeugbodens 4 ersichtlich ist. Dieser ist beispielsweise im allgemeinen mehr oder weniger eben, hat jedoch eine nach oben ragende Ausbuchtung. Diese begrenzt eine gegen unten offene Rinne, die häufig als Tunnel bezeichnet wird und mindestens einen Teil des Auspuffs 12, insbesondere mindestens ein Querschnittbereich des ersten Schalldämpfers 21 und beispielsweise auch noch eine nicht gezeichnete Welle enthält.

Jeder Halter 28 weist ein unmittelbar am Gehäuse 51 des ersten Schalldämpfers 21 angreifendes Halteorgan 61 und zwei das letztere mit dem Fahrzeugboden 4 verbindende Verbindungsorgane 62 auf. Das Halteorgan 61 besteht aus einem metallischen Material, beispielsweise rostfreiem Stahl, ist starr, länglich sowie rechtwinklig zum Schalldämpfer 21 angeordnet und besteht im wesentlichen aus einem U-Profilstab mit einem Steg 61a und zwei Schenkeln 61b. Der mittlere Abschnitt des Halteorgans 61 ist parallel zur Querschnittsform des Mantels des Schalldämpfer-Gehäuses 51 gebogen, liegt mit der äusseren, sich oben befindenden Fläche des Stegs 65a an der unteren Seite des Schalldämpfer-Gehäuses an dessen Mantel an und ist beispielsweise durch einige Punkt-Schweissverbindungen oder sonstige Schweiss-Verbindungen am Mantel befestigt. Jedes Verbindungsorgan 62 ist mindestens teilweise elastisch deformierbar und besteht zum Beispiel aus einem einstückigen, gummielastischen Körper aus synthetischem und/oder natürlichen Gummi. Jedes Verbindungsorgan 62 ist im wesentlichen rotationssymmetrisch zu einer zur Fahr-Ebene 9 ungefähr rechtwinkligen und also ungefähr vertikalen Achse 63 und hat einen Hauptabschnitt 62a. Dieser besteht aus einem kompakten Block, hat über seine ganze axiale Abmessung einen vollen Querschnitt und enthält also keine freien Hohl- oder Zwischenräume oder Löcher. Der Hauptabschnitt 62a hat eine im allgemeinen zylindrische, aber im mittleren Bereich im Axialschnitt leicht eingebuchtete Umfangsfläche 62b, an seinen beiden Enden ebene, ringförmige Auflage- und/oder Endflächen 62d und hängt im mittleren Bereich von jedem Ende mit einem in axialer Richtung von diesem wegragenden, ungefähr pilzförmigen Fortsatz zusammen, der Befestigungs- und/oder Verbindungsmittel 62e bildet. Die beiden zum gleichen Halter 28 gehörenden Verbindungsorgane 62 sind entlang dem Halteorgan 61 des betreffenden Halters gegeneinander versetzt und in der Nähe der Enden des Halteorgans 61 angeordnet. Jedes Verbindungsorgan liegt mit den ebenen Auflage- und/oder Endflächen 62d an der oberen Fläche des Stegs 61a des Halteorgans 61 bzw. an einem Abschnitt der unteren Fläche des Fahrzeugbodens 4 an.

Die das erste Gehäuse 51 mit dem Fahrzeugboden 4 verbindenden Verbindungsorgane 62 ermöglichen gewisse, aber in allen Richtungen nur relativ kleine Bewegungen des ersten Gehäuses 51. Die Verbindungsorgane 62 der Halter 28 sind vorzugsweise derart ausgebildet, dass das erste Gehäuse 51 bei zusammengebautem Auspuff und vorzugsweise auch in vom restlichen Auspuff getrenntem Zustand durch eine auf das Gehäuse einwirkende, konstante, stationäre Beschleunigung von 10 m/s² und beispielsweise auch noch 20 m/s² oder sogar 50 m/s² oder eine konstante, stationäre Kraft von 100 N mit beliebiger Richtung bezüglich des Fahrzeugkörpers höchstens 5 mm und vorzugsweise höchstens 2 mm aus der Mittel- und/oder Ruhelage ausgelenkt wird.

Die zum Halten des zweiten Gehäuses 52 des zweiten Schalldämpfers dienenden Halter 30 sind teilweise ähnlich wie die Halter 28 ausgebildet und weisen ebenfalls im wesentlichen aus stellenweise gebogenen, metallischen U-Profilstäben bestehende Halteorgane und mindestens zum Teil gummielastische Verbindungsorgane auf. Die Halteorgane der Halter 30 sind jedoch auf der oberen Seite des zweiten Gehäuses befestigt. Ferner sind die aus Gummi bestehenden Hauptabschnitte der Verbindungsorgane der Halter 30 nicht rotationssymmetrisch zu einer Achse, sondern ungefähr quaderförmig und derart angeordnet, dass das zweite Gehäuse 52 in vom restlichen Auspuff getrenntem Zustand durch eine an ihn angreifende Kraft, die ungefähr parallel zu einer durch die Zentren der beiden Gehäuse 51, 52 verlaufenden Gehäuse-Verbindungsgerade ist, wesentlich mehr aus seine Ruhelage ausgelenkt als durch eine gleich grosse Kraft, die zur Gehäuse-Verbindungsgeraden rechtwinklig ist und sonst eine beliebige Richtung hat.

Die virtuelle Dreh- und/oder Schwenk-Achse 10 ist am Verbrennungsmotor 6 nicht ersichtlich, kann jedoch experimentell ermittelt werden. Hierzu kann man beispielsweise mindestens ein Zeichenbrett mit einer von einem Papierstück gebildeten Zeichenfläche oder dergleichen derart am Fahrzeugkörper befestigen, dass die Zeichenfläche ungefähr senkrecht zur virtuellen Achse ist. Ferner kann man mindestens zwei Zeichenstifte an sich nicht gerade auf der virtuellen Achse befindenden Stellen derart mit dem Motorgehäuse verbinden, dass sie die bzw. eine Zeichenfläche berühren. Wenn das Motorgehäuse beim Betrieb des Verbrennungsmotors Schwenkbewegungen ausführt, zeichnen die Zeichenstifte Kreisbogen auf die Zeichenfläche. Aus diesen Kreisbogen kann dann die Lage der virtuellen Achse bestimmt werden. Statt am Motorgehäuse Zeichenstifte anzubringen, kann man mindestens einen nicht auf der virtuellen Achse liegenden Punkt und beispielsweise zwei oder noch mehr solche Punkte durch Anbringen einer Spitze und/oder eines Reflektors oder in anderer Weise definieren, mit geeigneten Detektionsmitteln die Bahn jedes definierten Punktes ermitteln und daraus die Lage sowie Richtung der virtuellen Achse bestimmen.

Der Auspuff 12 wird durch das ihm beim Betrieb vom Verbrennungsmotor 6 zugeführte, heisse Abgas erhitzt. Die starren Teile des Auspuffs werden daher durch die thermische Dehnung verlängert. Die thermisch verursachten Längenänderungen der stromaufwärts vom ersten Schalldämpfer 21 angeordneten, starren Auspuffteile werden mindestens zum grössten Teil durch die beiden elastisch deformierbaren, flexiblen Leitungselemente 16 und 18 ausgeglichen. Die im Ruhezustand ungefähr geraden Achsen aufweisenden Wellenbälge der Leitungselemente 16, 18 werden beim Betrieb des Motors dann gebogen und eventuell auch ein wenig zusammengedrückt. Wenn sich der Auspuff nach der Ausserbetriebsetzung des Motors wieder abkühlt, nehmen die starren Auspuffteile und Wellenbälge wieder ihre ursprünglichen Längen und Formen ein. Die Längen der Wellenbälge werden also beim Ausgleichen der thermisch verursachten Längenänderungen eventuell vorübergehend verändert. Diese Längenänderungen erfolgen jedoch viel seltener und langsamer als die durch die Verschwenkungen des Motorgehäuses verursachten Hin- und Her-Bewegungen und haben daher praktisch keinen Einfluss auf die Lebensdauer der Wellenbälge.

Der das erste Gehäuses 51 mit dem zweiten Gehäuses 52 verbindende Auspuffteil ist mindestens im wesentlichen durch das gebogene Rohr 22 gebildet, enthält weder Wellenbälge noch sonstige deformierbare Leitungselemente und ist also im wesentlichen überall starr. Die durch das heisse Abgas verursachte Längenänderung des Rohrs 22 und die dadurch von letzteren erzeugte, die beiden Schalldämpfer-Gehäuse voneinander wegdrückende, relativ grosse Kraft bewirkt eine Biegung der gummielastischen Verbindungsorgane, insbesondere der beim zweiten Gehäuse 52 vorhandenen Verbindungsorgane. Die Verlängerung des Rohrs 22 wird daher mindestens zum grössten Teil durch eine elastische Biegung der letztgenannten Verbindungsorgane und eine Verschiebung bzw. Auslenkung des zweiten Gehäuses ausgeglichen.

Wenn das Motorgehäuse wegen Leistungsänderungen und/oder Vibrationen des Verbrennungsmotors Schwenkbewegungen ausführt, wird das Leitungselement-Zentrum 42 des ersten flexiblen Leitungselements 16 ungefähr entlang einem Kreisbogen hin und her bewegt, dessen Zentrum auf der virtuellen Achse 10 ist. Das Zentrum 42 wird also fast rechtwinklig zur Leitungselemente-Verbindungsgeraden 55 bewegt. Der Abstand der beiden Leitungselement-Zentren 42 und 44 wird daher bei den Schwenkbewegungen des Motorgehäuses höchstens geringfügig verändert. Dementsprechend werden die Wellenbälge der flexiblen Leitungselemente 16, 18 bei den Verschwenkungen des Motorgehäuses hin und her gebogen, ohne dass die auf den Leitungselement-Achsen gemessenen Längen der Wellenbälge nennenswert geändert werden. Die Wellenbälge werden auch praktisch nicht auf Scherung beansprucht.

Die Schalldämpfer haben von den stromabwärts des ersten deformierbaren Leitungselements 16 angeordneten Auspuffteilen die grösste Masse pro Längeneinheit. Die gummielastischen Verbindungsorgane der Halter 28, 30 verbinden die beiden Schalldämpfer zwar etwas beweglich und federnd mit dem Fahrzeugboden. Wie beschrieben, ermöglichen die Verbindungsorgane 62 jedoch in allen Richtungen nur geringe Auslenkungen des ersten Schalldämpfers. Die Verbindungsorgane der Halter 30 halten Auslenkungen des zweiten Schalldämpfers insbesondere in allen zur erwähnten Gehäuse-Verbindungsgeraden rechtwinkligen Richtungen sehr klein und hemmen auch zur Gehäuse-Verbindungsgeraden parallele Verschiebungen. Die Rohre 22, 24 und insbesondere die beiden Schalldämpfer 21, 23 werden daher durch die infolge von Leistungsänderungen des Verbrennungsmotors stattfindenden Verschwenkungen des Motorgehäuses, durch die beim normalen Betrieb vom Verbrennungsmotor erzeugten Vibrationen und durch die allenfalls vom pulsierenden Abgas angeregten Schwingungen höchstens wenig aus ihren Mittellagen ausgelenkt, die sie nach Erreichen der Betriebstemperaturen infolge der thermischen Abmessungsänderungen einnehmen. Die beim normalen Fahrbetrieb des Kraftfahrzeugs durch Bodenunebenheiten, Kurven, Beschleunigungs- und Bremsvorgänge verursachten und auf den Auspuff einwirkenden Beschleunigungen verursachen ebenfalls höchstens geringe Auslenkungen aus den genannten Mittellagen.

Die stromabwärts des Katalysators 14 und insbesondere des ersten elastisch deformierbaren Leitungselements 16 sowie des zweiten deformierbaren Leitungselements 18 angeordneten Rohre brauchen keine grossen, durch die Leistungsänderungen des Motors und/oder die Vibrationen und/oder das Fahren verursachten Beschleunigungen und Kräfte aufzunehmen. Die Rohre 17, 22 und 24 brauchen daher im wesentlichen nur ihr eigenes Gewicht und eventuell noch teilweise das Gewicht der elastisch deformierbaren Leitungselemente 16, 18 zu tragen. Es ist daher nicht nötig die Rohre 22, 24 durch unmittelbar an ihnen selbst angreifende Halter am Fahrzeugkörper zu halten. Die Rohre 17, 22, 24, die Schalldämpfer-Gehäuse und die in den Schalldämpfern vorhandenen Rohre können zudem dünnwandig und leicht gemacht werden.

Das zum Teil in Fig. 6 ersichtliche Kraftfahrzeug 101, besteht wieder aus einem Personenkraftwagen, besitzt einen Fahrzeugkörper 102 mit einer Karosserie 103, einem Fahrzeugboden 104 und einem Gestell 105 sowie einen Verbrennungsmotor 106 mit einem Motorgehäuse 106a und einer Motorwelle 106b. Das Motorgehäuse 106a ist mit Haltemitteln 108 beweglich am Gestell 105 gehalten. Das Kraftfahrzeug steht auf einer Fahr-Ebene 109. Das Motorgehäuse führt beim Betrieb Schwenkbewegungen um eine virtuelle Dreh- und/oder Schwenk-Achse 110 aus. Das Fahrzeug hat ferner eine Abgasanlage 111 mit einem Auspuff 112. Dieser weist - beginnend beim Motor - entlang dem Abgas-Strömungsweg der Reihe nach eine Einlass- und Sammelvorrichtung 113 mit einem Auspuffkrümmer und einem gemeinsamen Ausgang, eine Verbindung 115, ein erstes elastisch deformierbares, flexibles Leitungselement 116, ein starres Rohr 117, ein zweites elastisch deformierbares, flexibles Leitungselement 118, eine Verbindung 119, einen Katalysator 120, eine Verbindung 121, einen Schalldämpfer 122 und beispielsweise noch einen nicht mehr sichtbaren zweiten Schalldämpfer sowie zusätzliche Rohre auf. Der Katalysator 120, der Schalldämpfer 122 und der nicht sichtbare Schalldämpfer sind mit Haltemitteln 127 am Fahrzeugboden 104 gehalten.

Die beiden flexiblen Leitungselemente 116 und 118 haben eine Leitungselement-Achse 141 bzw. 143 und ein Leitungselement-Zentrum 142 bzw. 144. Die beiden Leitungselemente 116, 118 definieren eine Leitungselemente-Verbindungsgerade 155, die durch die beiden Leitungselemente, nämlich mindestens annähernd durch deren Zentren 142 bzw. 144 verläuft und die virtuelle Achse 110 bei kaltem, stillstehendem Motor und/oder beim Betrieb nach Erreichen der normalen Betriebstemperaturen und bei sich in der Schwenk-Mittelstellung befindendem Motorgehäuse mindestens annähernd kreuzt.

Die Motorwelle 106b ist wiederum rechtwinklig zur Fahrzeug-Längsrichtung. Die Abgasauslässe des Motorgehäuses 106a sind jedoch dem frontseitigen Ende des Fahrzeugs zugewandt. Die beiden Leitungselemente 116, 118 befinden sich daher auf verschiedenen Seiten einer zur Fahr-Ebene 9 senkrechten und durch die virtuelle Achse 110 verlaufenden Ebene. Die beiden Zentren 142, 144 befinden sich dementsprechend auf der Geraden 155 auf verschiedenen Seiten der virtuellen Achse 110.

Der Auspuff 112 unterscheidet sich vom Auspuff 12 zudem dadurch, dass der Katalysator 120 das erste stromabwärts von den flexiblen Leitungselementen 116, 118 angeordnete Gehäuse 151 aufweist. Der Schalldämpfer 122 bildet dann das zweite Gehäuse 152 und der nicht sichtbare, zweite Schalldämpfer das dritte Gehäuse. Soweit vorgängig nichts anderes geschrieben wurde, sind das Kraftfahrzeug 101 und dessen Abgasanlage 111 ähnlich ausgebildet wie das Kraftfahrzeug 1 bzw. die Abgasanlage 11 und haben dementsprechend auch ähnliche Eigenschaften.

Die Kraftfahrzeuge und Auspuffe können auf verschiedene Arten geändert werden. Zum Beispiel können die flexiblen Leitungselemente eventuell schon gebogene Achsen haben, wenn sich der Motor im Ruhezustand befindet und/oder wenn der Motor sowie der Auspuff beim Betrieb die Betriebstemperaturen erreicht haben und das Motorgehäuse seine Schwenk-Mittelstellung einnimmt. In diesen Fällen können dann die sich bei den Leitungselement-Zentren an die gebogenen Leitungselement-Achsen anschmiegenden Tangenten einen Winkel von mindestens 30° miteinander bilden.

Es können auch Merkmale von den Kraftfahrzeugen 1, 101 und deren Abgasanlagen 11, 111 miteinander kombiniert werden. Ferner können die Verbindungsorgane 62 aus Verbundkörpern gebildet werden, die zusätzlich zu einem aus Gummi bestehenden Teil metallische Befestigungs- und/oder Verbindungsmittel aufweisen. Des weiteren kann der Auspuff einen kombinierten Katalysator-Schalldämpfer aufweisen, dessen Gehäuse das erste stromabwärts von den flexiblen Leitungselementen angeordnete Gehäuse bildet.

## Patentansprüche

1. Abgasanlage für ein einen Fahrzeugkörper (2, 102) und einen Verbrennungsmotor (6, 106) mit einem Motorgehäuse (6a, 106a) aufweisendes Kraftfahrzeug (1, 101), insbesondere einen Personenkraftwagen, mit einem mit dem Verbrennungsmotor (6, 106) verbindbaren Auspuff (12, 112), der ein flexibles Leitungselement (16, 116) und mindestens ein stromabwärts von diesem angeordnetes, zu einem Katalysator (120) und/oder Schalldämpfer (21, 23, 122) gehörendes Gehäuse (51, 52, 151, 152, 153) aufweist, **dadurch gekennzeichnet, dass** das genannte, erste flexible Leitungselement (16, 116) über ein Rohr (17, 117) und ein zweites flexibles Leitungselement (18, 118) mit dem ersten Gehäuse (51, 151) verbunden ist und dass die beiden flexiblen Leitungselemente (16, 18, 116, 118) eine durch sie verlaufende Gerade (55, 155) definieren, die mindestens annähernd eine virtuelle Achse (10, 110) kreuzt, um die das Motorgehäuse (6a, 106a) beim Betrieb Schwenkbewegungen ausführen kann.

2. Abgasanlage nach Anspruch 1, **dadurch gekennzeichnet, dass** Haltemittel (27, 127) vorhanden sind, um das bzw. das erste stromabwärts von den beiden flexiblen Leitungselementen (16, 18, 116, 118) angeordnete Gehäuse (51, 151) derart zu halten, dass dieses bei zusammengebautem Auspuff (12, 112) und/oder in vom restlichen Auspuff (12, 112) getrenntem Zustand durch eine auf das Gehäuse (51, 151) einwirkende, konstante Beschleunigung von 10 m/s² oder konstante Kraft von 100 N in jeder beliebigen Richtung bezüglich des Fahrzeugkörpers (2, 102) höchstens 5 mm und vorzugsweise höchstens 2 mm ausgelenkt wird.

3. Abgasanlage nach Anspruch 1 oder 2 **dadurch gekennzeichnet, dass** jedes flexible Leitungselement (16, 18, 116, 118) eine Leitungselement-Achse (41, 43, 141, 143) hat und dass die beiden Leitungselement-Achsen (41, 43, 141, 143) und/oder sich an diese anschmiegende Tangenten miteinander einen Winkel bilden, der vorzugsweise mindestens 30° beträgt.

4. Abgasanlagen nach einem der Ansprüche 1 bis 3, **dadurch gekennzeichnet, dass** der Auspuff (12, 112) zwischen den beiden flexiblen Leitungselementen (16, 18, 116, 118) frei von Gehäusen ist.

5. Abgasanlage nach einem der Ansprüche 1 bis 4, **dadurch gekennzeichnet, dass** keine Haltemittel an dem die beiden flexiblen Leitungselemente (16, 18, 116, 118) miteinander verbindenden Rohr (17, 117) angreifen.

6. Abgasanlage nach einem der Ansprüche 1 bis 5, **dadurch gekennzeichnet, dass** jedes der beiden flexiblen Leitungselemente (16, 18, 116, 118) einen Wellenbalg (33) aufweist.

7. Abgasanlage nach einem der Ansprüche 1 bis 6, **dadurch gekennzeichnet, dass** die genannte Gerade (55, 155) in mindestens einem Zustand des Kraftfahrzeugs, Verbrennungsmotors (6, 106) und Auspuffs (12, 112), beispielsweise wenn der Verbrennungsmotor (6, 106) sowie der Auspuff (12, 112) beim Betrieb ungefähr mittlere Betriebstemperaturen erreicht haben und das Motorgehäuse (6a, 106a) eine mittlere Stellung einnimmt, mindestens annähernd durch Zentren (42, 44, 142, 144) der beiden flexiblen Leitungselemente (16, 18, 116, 118) verläuft und mindestens annähernd die virtuelle Achse (10, 110) kreuzt.

8. Kraftfahrzeug mit einer Abgasanlage (12, 112) nach einem der Ansprüche 1 bis 7 und mit einem Fahrzeugkörper (2, 102) sowie einem Verbrennungsmotor (6, 106), wobei das Motorgehäuse (6a, 106a) des letzteren am Fahrzeugkörper (2, 102) gehalten ist, **dadurch gekennzeichnet, dass** der Auspuff (12, 112) derart ausgebildet und durch Haltemittel (27, 127) am Fahrzeugkörper (2, 102) gehalten ist, dass eine durch die beiden Leitungselemente (16, 18, 116, 118) verlaufende Gerade (55, 155) mindestens annähernd die virtuelle Achse (10, 110) kreuzt, um die das Motorgehäuse (6a, 106a) beim Betrieb Schwenkbewegungen ausführen kann.

9. Kraftfahrzeug nach Anspruch 8, **dadurch gekennzeichnet, dass** das Motorgehäuse (6a, 106a) beweglich am Fahrzeugkörper (2, 102) gehalten ist und dass der Auspuff (12, 112) eine das Motorgehäuse (6a, 106a) mit dem zweiten flexiblen Leitungselement (18, 118) verbindenden Auspuffabschnitt hat, der frei von Verbindungen mit dem Fahrzeugkörper (2, 102) ist.

10. Verfahren zur Bildung einer Abgasanlage gemäss einem der Ansprüche 1 bis 7, **dadurch gekennzeichnet, dass** eine virtuelle Achse (10, 110) ermittelt wird, um die das Motorgehäuse (6a, 106a) beim Betrieb Schwenkbewegungen ausführt, und dass der Auspuff (12, 112) derart ausgebildet sowie angeordnet wird, dass eine durch die beiden flexiblen Leitungselemente (16, 18, 116, 118) verlaufende Gerade (55, 155) die virtuelle Achse (10, 110) mindestens annähernd kreuzt.

## Claims

1. Exhaust system for a motor vehicle (1, 101) which has a vehicle body (2, 102) and an internal combustion engine (6, 106) with an engine casing (6a, 106a), in particular a car, and which has an exhaust (12, 112) connectable to the internal combustion engine (6, 106) and having a flexible pipe member (16,116) and at least one casing (51, 52, 151, 152, 153) arranged downstream of said pipe member and belonging to a catalytic converter (120) and/or silencer (21, 23, 122), **characterized in that** said, first flexible pipe member (16, 116) is connected to the first casing (51, 151) via a pipe (17, 117) and a second flexible pipe member (18, 118), and that the two flexible pipe members (16, 18, 116, 118) define a straight line (55, 155) which passes through them and at least approximately intersects a virtual axis (10, 110) about which the engine casing (6a, 106a) can swivel during operation.

2. Exhaust system according to Claim 1, **characterized in that** retaining means (27, 127) are present for holding the, or the first, casing arranged downstream of the two flexible pipe members (16, 18, 116, 118) in such a way that, when the exhaust (12, 112) is assembled and/or in the state separated from the remaining exhaust (12, 112), said casing is deflected in any direction relative to the vehicle body (2, 102) by at most 5 mm and preferably at most 2 mm by a constant acceleration of 10 m/s² or constant force of 100 N acting on the casing (51, 151).

3. Exhaust system according to Claim 1 or 2, **characterized in that** each flexible pipe member (16, 18, 116, 118) has a pipe member axis (41, 43, 141, 143) and that the two pipe member axes (41, 43, 141, 143) and/or tangents to said axes make with one another an angle which is preferably at least 30°.

4. Exhaust systems according to any of Claims 1 to 3, **characterized in that** the exhaust (12, 112) is free of casings between the flexible pipe members (16, 18, 116, 118).

5. Exhaust system according to any of Claims 1 to 4, **characterized in that** no retaining means engage the pipe connecting the two flexible pipe members (16, 18, 116, 118) to one another.

6. Exhaust system according to any of Claims 1 to 5, **characterized in that** each of the two flexible pipe members (16, 18, 116, 118) has a bellows (33).

7. Exhaust system according to any of Claims 1 to 6, **characterized in that** said straight line (55, 155) passes at least approximately through centres (42, 44, 142, 144) of the two flexible pipe members (16, 18, 116, 118) and at least approximately intersects the virtual axis (10, 110) in at least one state of the motor vehicle, internal combustion engine (6, 106) and exhaust (12, 112), for example when the internal combustion engine (6, 106) and the exhaust (12, 112) have reached about average operating temperatures during operation and the engine casing (6a, 106a) assumes a middle position.

8. Motor vehicle having an exhaust system (12, 112) according to any of Claims 1 to 7 and having a vehicle body (2, 102) and an internal combustion engine (6, 106), the engine casing (6a, 106a) of the latter being held on the vehicle body (2, 102), **characterized in that** the exhaust (12, 112) is formed, and is held on the vehicle body (2, 102) by retaining means (27, 127), in such a way that a straight line passing through the two pipe members (16, 18, 116, 118) at least approximately intersects the virtual axis (10, 110) about which the engine casing (6a, 106a) can swivel during operation.

9. Motor vehicle according to Claim 8, **characterized in that** the engine casing (6a, 106a) is movably held on the vehicle body (2, 102) and that the exhaust (12, 112) has an exhaust section which connects the engine casing (6a, 106a) to the second flexible pipe member (18, 118) and is free of connections to the vehicle body (2, 102).

10. Method for the formation of an exhaust system according to any of Claims 1 to 7, **characterized in that** a virtual axis (10, 110) is determined about which the engine casing (6a, 106a) swivels during operation, and that the exhaust (12, 112) is formed and arranged in such a way that a straight line (55, 155) passing through the two flexible pipe members (16, 18, 116, 118) at least approximately intersects the virtual axis (10, 110).

## Revendications

1. Système d'échappement pour un véhicule automobile (1, 101) comprenant un châssis (2, 102) de véhicule et un moteur à combustion (6, 106) avec une carcasse (6a, 106a) de moteur, en particulier pour une voiture particulière, avec un échappement (12, 112) pouvant être relié au moteur à combustion (6, 106), échappement présentant un élément (16, 116) de conduite flexible et au moins un logement (51, 52, 151, 152, 153) placé en dessous de celui-ci, appartenant à un catalyseur (120) et/ou un silencieux (21, 23, 122), **caractérisé en ce que** ledit premier élément (16, 116) de conduite flexible est relié par un tuyau (17, 117) et un deuxième élément de conduite flexible (18, 118) au premier logement (51, 151) et **en ce que** les deux éléments (16, 18, 116, 118) de conduite flexible définissent une droite (55, 155) qui s'étend à travers eux et qui croise au moins de manière approximative un axe virtuel (10, 110) autour duquel la carcasse (6a, 106a) du moteur peut effectuer en service des mouvements oscillants.

2. Système d'échappement selon la revendication 1, **caractérisé en ce qu'**il y des moyens de retenue (27, 127) pour retenir le logement ou le premier logement (51, 151) disposé en aval des deux éléments (16, 18, 116, 118) de conduite flexible de telle manière que celui-ci, lorsque l'échappement (12, 112) est monté et / ou est séparé du reste de l'échappement (12, 112), soit dévié de 5 mm au maximum et, de préférence, de 2 mm au maximum par une accéfération constante de 10 m/s² ou une force constante de 100 N dans n'importe quelle direction par rapport au châssis (2, 102) du véhicule agissant sur le logement (51, 151),.

3. Système d'échappement selon la revendication 1 ou 2, **caractérisé en ce que** chaque élément (16, 18, 116, 118) de conduite flexible a un axe (41, 43, 141, 143) d'élément de conduite et **en ce que** les deux axes (41, 43, 141, 143) d'élément de conduite et / ou les tangentes qui les épousent forment ensemble un angle qui est de préférence d'au moins 30°.

4. Système d'échappement selon une des revendications 1 à 3, **caractérisé en ce que** l'échappement (12, 112) entre les deux éléments (16, 18, 116, 118) de conduite flexible sont libres de logement.

5. Système d'échappement selon une des revendications 1 à 4, **caractérisé en ce qu'**aucun moyen de retenue n'est en prise avec le tuyau (17, 117) reliant ensemble les deux éléments (16, 18, 116, 118) de conduite flexible.

6. Système d'échappement selon une des revendications 1 à 5, **caractérisé en ce que** chacun des deux éléments (16, 18, 116, 118) de conduite flexible présente un tuyau ondulé (33).

7. Système d'échappement selon une des revendications 1 à 6, **caractérisé en ce que**, dans au moins un état du véhicule à moteur, du moteur à combustion (6, 106) et de l'échappement (12, 112), par exemple quand le moteur à combustion (6, 106) ainsi que l'échappement (12, 112) ont environ atteint en service des températures moyennes de fonctionnement et que la carcasse (6a, 106a) du moteur adopte une position médiane, ladite droite (55, 155) s'étend au moins de manière approximative à travers les centres (42, 44, 142, 144) des deux éléments (16, 18, 116, 118) de conduite flexible et croise au moins de manière approximative les axes virtuels (10, 110).

8. Véhicule à moteur avec un système d'échappement (12, 112) selon une des revendications 1 à 7 et avec un châssis (2, 102) de véhicule ainsi qu'un moteur à combustion (6, 106), dans lequel la carcasse (6a, 106a) du moteur est maintenu sur le châssis (2, 102) du véhicule, **caractérisé en ce que** l'échappement (12, 112) est conformé et est maintenu par un moyen de retenue (27, 127) sur le châssis (2, 102) du véhicule de telle manière qu'une droite (55, 155) s'étendant à travers les deux éléments (16, 18, 116, 118) de conduite croise au moins de manière approximative les axes virtuels (10, 110) autour desquels la carcasse (6a, 106a) du moteur en service peut exécuter des mouvements oscillants.

9. Véhicule à moteur selon la revendication 8, **caractérisé en ce que** la carcasse (6a, 106a) du moteur est maintenue de manière mobile sur le châssis (2, 102) du véhicule et **en ce que** l'échappement (12, 112) a une section d'échappement reliant la carcasse (6a, 106a) du moteur au deuxième élément (18, 118) de conduite flexible, laquelle est libre de connexions avec le châssis (2, 102) du véhicule.

10. Procédé pour former un système d'échappement conforme à une des revendications 1 à 7, **caractérisé en ce qu'**un axe virtuel (10, 110) autour duquel la carcasse (6a, 106a) du moteur en service exécute des mouvements oscillants est déterminé, et **en ce que** l'échappement (12, 112) est conformé et disposé de telle manière qu'une droite (55, 155) s'étendant à travers les deux éléments (16, 18, 116, 118) de conduite flexible croise au moins de manière approximative les axes virtuels (10, 110).
